## Europäisches Patentamt
## European Patent Office
## Office européen des brevets

(19)

(11) Veröffentlichungsnummer: **0 075 641**
**B1**

(12) **EUROPÄISCHE PATENTSCHRIFT**

(45) Veröffentlichungstag der Patentschrift:
31.08.88

(51) Int. Cl.⁴: **B 32 B 27/12**, B 32 B 15/08

(21) Anmeldenummer: **82100692.1**

(22) Anmeldetag: **01.02.82**

(54) Verbundwerkstoff.

(30) Priorität: 28.09.81 DE 3138513
23.10.81 DE 3142148

(43) Veröffentlichungstag der Anmeldung:
06.04.83 Patentblatt 83/14

(45) Bekanntmachung des Hinweises auf die Patenterteilung:
31.08.88 Patentblatt 88/35

(84) Benannte Vertragsstaaten:
AT BE CH DE FR GB IT LI LU NL SE

(56) Entgegenhaltungen:
FR-A-2 348 804
FR-A-2 354 183
GB-A-2 060 486
US-A-2 742 391
US-A-3 627 613

(73) Patentinhaber: **Carl, Heinz, Ing.grad., Waldstrasse 16, D-8644 Pressig (DE)**

(72) Erfinder: **Carl, Heinz, Ing.grad., Waldstrasse 16, D-8644 Pressig (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

**Beschreibung**

Die Erfindung bezieht sich auf einen Verbundwerkstoff der im Oberbegriff von Anspruch 1 erläuterten Art.

Verbundwerkstoffe, die aus einem Gitterwerk und ein- bzw. beidseitig unter Wärmeeinwirkung aufgebrachter Kunststoffolie bestehen, sind in den unterschiedlichsten Ausführungsformen und den unterschiedlichsten Herstellungsarten bereits bekannt. So zeigt z. B. die US-A-3 627 613 einen Verbundwerkstoff aus einem oder mehreren metallischen Einlagen aus einem gewebten Drahtgitter oder perforiertem Metallblech und einer beidseitig aufgebrachten Kunststoffolie. Die Kunststoffolie wird vor dem Verbinden, beispielsweise durch Infrarot erwärmt und dann gegen die Einlage gedrückt. Die Verwendung einer Schrumpffolie ist nicht beschrieben. Auch muß bezweifelt werden, daß die Verwendung insbesondere bei einer Einlage aus dem gewebten Drahtgitter überhaupt möglich ist, da derartige Drahtgitter meist nicht stabil genug sind, um die beim Schrumpfen auftretenden Kräfte ohne Verformung aufzunehmen.

Die US-A-2 742 391 beschreibt einen Verbundwerkstoff aus einem Metallgitter oder Metallgeflecht mit beidseitiger Kunststoffolie, die aufgeklebt oder durch Ablösen mit Lösungsmitteln und nachfolgendem Aufeinanderpressen unter Wärmeeinfluß miteinander und mit dem Gitterwerk verbunden werden. Vor dem Verbinden wird das relativ dünne Metallgitter zunächst durch Tauchen mit einem Überzug versehen, auf dem dann die Folien befestigt werden können. Die Verwendung einer Schrumpffolie ist wiederum nicht beschrieben.

Die GB-A-2 060 486 beschreibt ein Verfahren zum Herstellen eines Verbundwerkstoffes, bei dem zwei thermoplastische Kunststoffolien durch Hitzeeinwirkung miteinander verschweißt werden, wobei sie metallische, sich kreuzende Drähte zwischen sich einschließen.

Auch die FR-A-2 348 804 beschreibt die Herstellung eines Verbundwerkstoffes aus einem metallischen Gitterwerk und ein- bzw. beidseitig aufgebrachter, normaler, nicht schrumpfender Kunststoffolie.

Der Erfindung liegt die Aufgabe zugrunde, einen Verbundwerkstoff bereitzustellen, der einfach aufgebaut, kostengünstig herstellbar und für die unterschiedlichsten Verwendungszwecke einsetzbar ist.

Die Aufgabe wird durch die kennzeichnenden Merkmale des Hauptanspruchs gelöst.

Das als Traggerüst ausgestaltete Gitterwerk sorgt für die notwendige Festigkeit, während die Schrumpffolie die Herstellung des Verbundwerkstoffes wesentlich erleichtert.

Besondere Vorteile werden gemäß den Ansprüchen 2 und 3 dadurch erreicht, daß das Gitterwerk von beiden Seiten mit der Kunststoffolie bedeckt wird, die das Gitterwerk zwischen sich einschließen. Auf diese Weise wird eine erhöhte Festigkeit und ein verbesserter Korrosionsschutz des Gitterwerkstoffes erreicht.

Ein besonders vorteilhaftes Ausführungsbeispiel ist aus dem Unteranspruch 4 ersichtlich. Das zwischen die Kunststoffolie und dem Gitterwerk eingeschobene Maschenwerk übernimmt die Unterstützung der Folie. Das Gitterwerk braucht somit lediglich entsprechend den aufzunehmenden Kräften dimensioniert zu werden.

Die Ansprüche 5 bis 8 beschreiben ein besonders bevorzugtes Herstellungsverfahren für den erfindungsgemäßen Verbundwerkstoff, das durch die Ausgestaltung nach Anspruch 6 mehr oder weniger automatisch ablaufen kann. Vor Auflegen der Kunststoffolie empfiehlt es sich, gemäß Anspruch 8, durch eine Richteinrichtung das Gitterwerk zu glätten.

Die Ansprüche 9 bis 11 beschreiben eine vorteilhafte Fertigungsstraße zum Herstellen des erfindungsgemäßen Verbundwerkstoffes aus Gitterwerk und Folie, bei dem diese Kunststoffolien aufgeschrumpft werden.

Die Erfindung wird nachstehend anhand der Zeichnungen näher erläutert.

Es zeigen:

Fig. 1　eine auseinandergezogene Darstellung des erfindungsgemäßen Verbundwerkstoffes mit einer Folie,

Fig. 2　eine auseinandergezogene Darstellung des erfindungsgemäßen Verbundwerkstoffes mit beidseitiger Folie,

Fig. 3　eine auseinandergezogene Darstellung des erfindungsgemäßen Verbundwerkstoffes mit einer Folie und zwischengelegtem Maschenwerk,

Fig. 4　eine auseinandergezogene Darstellung des Verbundwerkstoffes aus Fig. 3 mit zwei Folien, und

Fig. 5　eine schematische Darstellung einer Fertigungsstrasse für den erfindungsgemäßen Verbundwerkstoff.

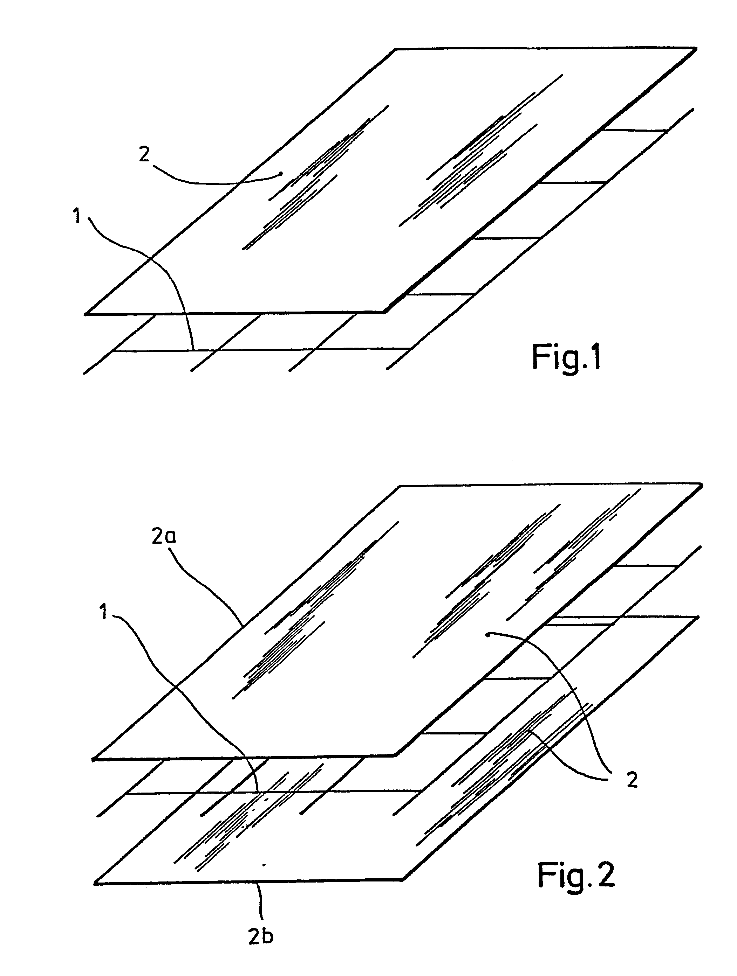

In Fig. 1 ist ein erfindungsgemäßer Verbundwerkstoff in auseinandergezogener Darstellung ersichtlich. Er besteht aus einem Gitterwerk 1 aus gekreuzten Metallstäben und einer die Gitteröffnungen bedeckenden flexiblen Kunststoffolie 2. Das Gitterwerk 1 besteht aus rechtwinklig gekreuzt verbundenen Metallstäben. Der Durchmesser der Stäbe und ihr Abstand zueinander richtet sich nach dem späteren Verwendungszweck, d. h. je nach den aufzunehmenden Kräften, der geforderten Formstabilität und der Dicke der Folie. Die Kunststoffolie 2 wurde auf ein vorgeschnittenes Stück des Gitterwerks 1 in entsprechender Größe aufgelegt und mit ihm verbunden. Die Verbindung der Werkstoffe erfolgt durch Schrumpfen der Kunststoffolie 2 unter Wärmeeinwirkung.

In Fig. 2 ist ein Verbundwerkstoff ersichtlich, bei dem das Gitterwerk 1 von einer oberen 2a und einer unteren 2b Kunststoffolie 2 eingeschlossen ist. Die Kunststoffolien 2a und 2b sind handelsübliche Schrumpffolien, die durch Wärmeeinwirkung über das Gitterwerk 1 gespannt und miteinander und mit dem Gitterwerk 1 verbunden sind. Die Verbindungsstellen liegen hauptsächlich am Rand und in jeder bzw. in ausgewählten Gitteröffnungen.

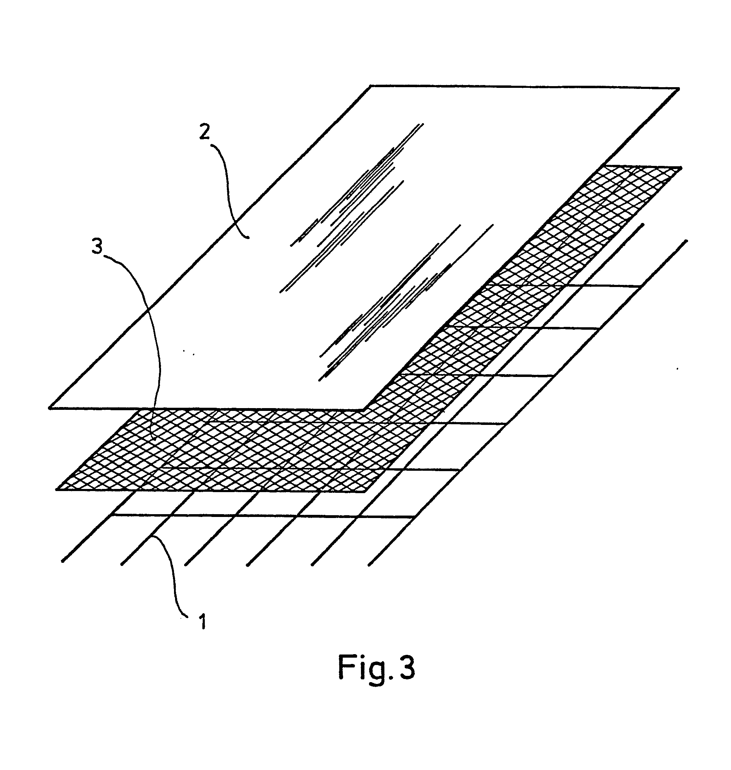

Fig. 3 zeigt einen Verbundwerkstoff, der aus dem Gitterwerk 1 aus Metall und einer Kunststoffolie 2 zusammengesetzt ist. Zwischen das Gitterwerk 1 und die Kunststoffolie 2 ist ein Maschenwerk 3 eingelegt. Das Maschenwerk 3 besteht aus einem handelsüblichen Drahtgitter. Das Drahtgitter ist gegenüber dem Gitterwerk 1 wesentlich feinmaschiger. Da sowohl die späteren statischen Kräfte als auch die Kräfte, die beim Schrumpfen auftreten, vollständig vom Gitterwerk 1 aufgenommen werden, kann das Maschenwerk 3 relativ dünn und flexibel sein. Das Maschenwerk 3 übernimmt die Unterstützung der Kunststoffolie 2, so daß diese kaum noch durchstoßen werden kann. Das Gitterwerk 1 kann demnach allein zur Aufnahme von statischen Kräften dimensioniert werden, d. h. der Abstand und der Durchmesser der verwendeten Metallstäbe und ihre Verbindung richtet sich nach der zu erwartenden Belastung. Die drei verwendeten Werkstoffe 1, 2, 3 werden analog wie unter Fig. 1 beschrieben miteinander verbunden.

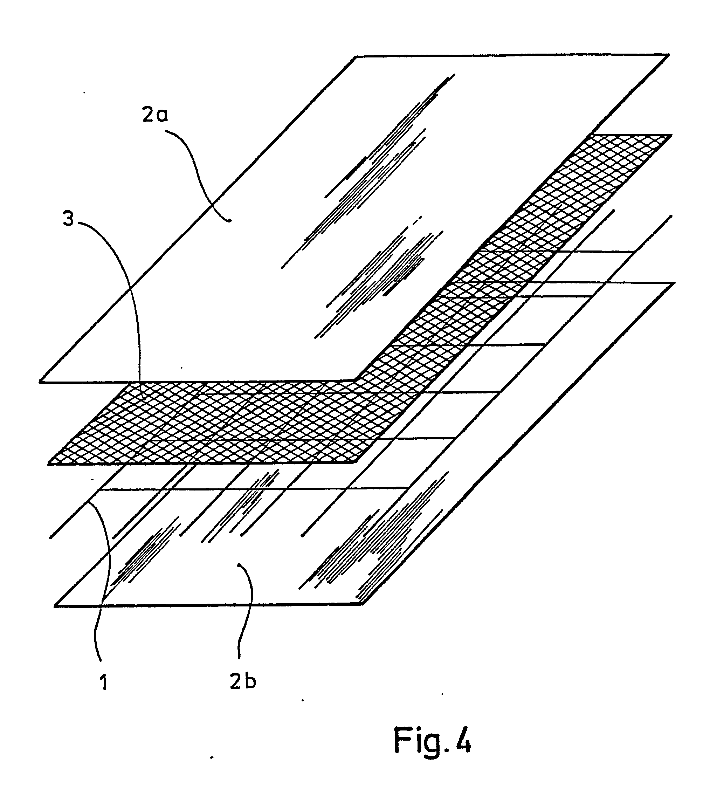

In Fig. 4 ist ein Verbundwerkstoff ersichtlich, der eine Kombination aus Fig. 2 und Fig. 3 darstellt. Die Kunststoffolien 2a und 2b sind wiederum handelsübliche Schrumpffolien, die in der beschriebenen Weise miteinander und mit Gitterwerk 1 und Maschenwerk 2 verbunden werden. Sie schließen das Gitterwerk 1 und das Maschenwerk 3 fest zwischen sich ein und bewirken damit eine rutschfeste Lagesicherung der einzelnen Werkstoffe des Verbundes ohne weitere Vorkehrungen.

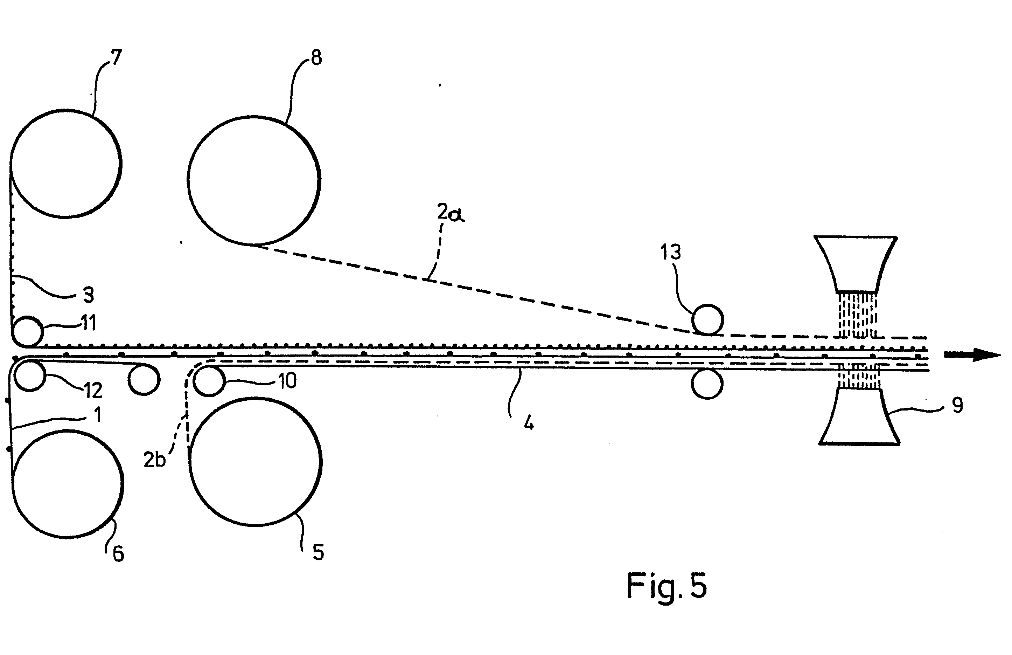

In Fig. 5 ist eine bevorzugte Fertigungsstrasse zur Herstellung des erfindungsgemäßen Verbundwerkstoffes beschrieben. Auf einer bahnförmigen Transporteinrichtung 4 werden übereinander die untere Kunststoffolie 2b, das Gitterwerk 1, das Maschenwerk 3 und die obere Kunststoffolie 2a gemeinsam aus ihren jeweiligen Vorräten abgezogen. Die Vorräte sind als Vorratsrollen 5 bis 8 dargestellt. Es können aber auch nur die Folien von Rollen abgezogen werden, wobei Gitter und Maschenwerk als Bahnen zugestellt werden. Die parallel übereinander liegenden, zueinander ausgerichteten Schichten der verwendeten Werkstoffe durchlaufen anschließend eine Schrumpf- und Schweißvorrichtung 9. In dieser Vorrichtung 9 werden durch Wärmeeinwirkung die beiden Kunststoffolien 2a und 2b an den Längskanten miteinander verbunden, so daß sie sich nicht zurückziehen. Die Schrumpf- und Schweißvorrichtung 9 arbeitet mit oberen und unteren Flammenreihen, die auf jeweils die obere und die untere Kunststoffolie 2a und 2b gerichtet sind. Durch in Richtung auf die zu verbindenden Werkstoffe eingeblasene Luft, die durch die Flammenreihen erhitzt wird, werden die Folien erweicht und gegeneinander gedrückt, so daß sie in den Gitter- bzw. Maschenzwischenräumen fest miteinander verschweißt werden. Gleichzeitig werden die Spannungen in den vorgereckten Schrumpffolien gelöst, so daß sie sich nach dem Abkühlen fest um Metallgitter und Maschenwerk legen und beide zwischen sich einschließen. Anschließend wird die Bahn des fertigen Verbundwerkstoffes auf die benötigte Größe abgelängt. Da beide Folien über die gesamte Oberfläche der Bahn jeweils in den Gitter- bzw. Maschenzwischenräumen miteinander verbunden sind, kann die Bahn beliebig geschnitten werden, ohne daß sich die Folien an den Schnittkanten zurückziehen. Das Gitterwerk 1 und auch das Maschenwerk 3 können nach Bedarf, bevor sie mit Folie belegt werden durch entsprechende, nicht dargestellte Einrichtungen gerichtet bzw. geglättet werden. Unmittelbar hinter der Schrumpf- und Schweißvorrichtung können außerdem ein oder mehrere Paare Andrückrollen aus Filz oder ähnlichem Material vorgesehen werden, die die noch weichen Folien zusätzlich gegeneinander und gegen Gitterwerk und Maschenwerk drücken.

Die Erfindung ist nicht auf die beschriebenen Ausführungsbeispiele beschränkt. Die in den einzelnen Figuren beschriebenen Merkmale können untereinander ausgetauscht werden. Auch die verwendeten Werkstoffe können von der beschriebenen Form abweichen. Beispielsweise kann das Maschenwerk aus den unterschiedlichsten Materialien und Bindungsarten bestehen. So ist eine handelsübliche Fliegengaze aus Metalldrähten oder Kunststoff ebenso geeignet, wie einer der üblichen Maschendrähte mit gröberen oder feineren Maschen in den unterschiedlichsten Bindungen. Das Gitterwerk kann je nach Verwendungszweck aus dickeren, starren oder dünneren, biegbaren Stäben, mit größeren oder kleinerem Maschenabstand, rechtwinklig oder schräg gekreuzt, geflochten oder übereinandergelegt hergestellt werden. Die Folie kann aus den verschiedensten Kunststoffen in verschiedenen Stärken, eingefärbt oder durchsichtig hergestellt werden.

**Patentansprüche**

1. Verbundwerkstoff aus einem metallischen Gitterwerk (1) und mindestens einer die Gitteröffnungen bedeckenden, flexiblen Kunststoffolie (2), dadurch gekennzeichnet, daß die flexible Kunststoffolie (2) eine Schrumpffolie ist, die auf das Gitterwerk (1) aufgeschrumpft ist, wobei das Gitterwerk (1) als die Schrumpfkräfte aufnehmendes Tragegerüst ausgebildet ist.

2. Verbundwerkstoff nach Anspruch 1, dadurch gekennzeichnet, daß das Gitterwerk (1) beidseitig mit je einer flexiblen Kunststoffolie (2a, 2b) bedeckt ist.

3. Verbundwerkstoff nach Anspruch 2, dadurch gekennzeichnet, daß die beidseitig aufgebrachten Kunststoffolien (2a, 2b) durch die Öffnungen des Gitterwerks (1) miteinander verbunden sind.

4. Verbundwerkstoff nach einem der Ansprüche 1 bis 3, dadurch gekennzeichnet, daß zwischen dem Gitterwerk (1) und zumindest einer Kunststoffolie (2) ein die Gitteröffnungen überlagerndes, gegenüber dem Gitterwerk (1) feinmaschigeres und dünneres Maschenwerk (3) aufgebracht ist.

5. Verfahren zum Herstellen eines Verbundwerkstoffes nach einem der Ansprüche 1 bis 4, dadurch gekennzeichnet, daß die verwendeten Werkstoffe in Bahnen und/oder Stücken parallel und fluchtend aufeinandergelegt werden und daß in dieser Lage die Kunststoffolie verschrumpft wird.

6. Verfahren nach Anspruch 5, dadurch gekennzeichnet, daß die verwendeten Werkstoffe kontinuierlich aus je einem Vorrat abgezogen werden und aufeinanderliegend einer Schrumpfeinrichtung zugeführt werden.

7. Verfahren nach Anspruch 6, dadurch gekennzeichnet, daß die Kunststoffolie in der Schrumpfeinrichtung mittels eines Heißgasstromes erweicht und gegen das Gitterwerk gedrückt wird.

8. Verfahren nach einem der Ansprüche 5 bis 7, dadurch gekennzeichnet, daß zumindest das Gitterwerk eine Einrichtung zum Glätten und Richten durchläuft.

9. Vorrichtung zum Herstellen eines Verbundwerkstoffes nach einem der Ansprüche 1 bis 4 und zum Durchführen des Verfahrens nach einem der Ansprüche 5 bis 8, gekennzeichnet durch je eine Vorratseinrichtung (5, 6, 7, 8) für jeden der verwendeten Werkstoffe (1, 2, 2a, 2b, 3), Legerollen (10, 11, 12, 13) zum gegenseitigen Ausrichten und Aufeinanderverlegen der aus der jeweiligen Vorratseinrichtung (5, 6, 7, 8) abgezogenen Werkstoffe, und durch einen Fördertisch (4) zum Fördern der aufeinanderliegenden Werkstoffe (1 , 2, 2a, 2b, 3) zu einer Schrumpfvorrichtung (9) zum Verbinden der aufeinanderliegenden Werkstoffe durch Schrumpfen der Kunststoffolie unter Wärmeeinwirkung.

10. Vorrichtung nach Anspruch 9, dadurch gekennzeichnet, daß die Schrumpfvorrichtung (9) eine Einrichtung zum Erzeugen eines Heißgasstromes umfaßt, und daß der Heißgasstrom gegen jede durch die Kunststoffolie (2, 2a, 2b) gebildete Oberfläche des Verbundwerkstoffes leitbar ist.

11. Vorrichtung nach einem der Ansprüche 9 oder 10, dadurch gekennzeichnet, daß in Bewegungsrichtung vor der Schrumpfvorrichtung (9) eine Einrichtung zum Glätten und Richten zumindest des Gitterwerkes (1) vorgesehen ist.

## Claims

1. Composite material of a metal network (1) and at least one flexible plastics foil (2) covering the network openings, characterised in that the flexible plastics foil (2) is a shrink foil, which is shrunk onto the network (1), the network (1) forming the shrinking force-absorbing supporting frame.

2. Composite material according to claim 1, characterised in that the network (1) is covered on both sides with a flexible plastics foil (2a, 2b).

3. Composite material according to claim 2, characterised in that the plastics foils (2a, 2b) applied to both sides are connected to one another through the openings of the network (1).

4. Composite material according to one of claims 1 to 3, characterised in that between the network and at least one plastics foil (2) a finer-meshed and thinner mesh (3) is applied overlying the network openings adjacent the network (1).

5. Process for the production of a composite material according to one of claims 1 to 4, characterised in that the materials to be used in length and/or pieces are disposed parallel and flat against one another and in that in this position the plastics foil is shrunk.

6. Process according to claim 5, characterised in that the materials to be used are each drawn from a supply and are guided disposed against one another to a shrink device.

7. Process according to claim 6, characterised in that the plastics foil is softened in the shrink device by means of a stream of hot gas and is pressed against the network.

8. Process according to one of claims 5 to 7, characterised in that at least the network runs through a device for smoothing and regulating.

9. Apparatus for producing a composite material according to one of claims 1 to 4, and for carrying out the process according to one of claims 5 to 8, characterised by a respective supply device (5, 6, 7, 8) for each of the materials to be used (1, 2, 2a, 2b, 3), positioning rolls (10, 11, 12, 13) for regulating and disposing against one another from the opposite side, the materials drawn out from each of the supply devices (5, 6, 7, 8) and by a conveyer table (4) for conveying the materials (1, 2, 2a, 2b, 3) lying against one another to a shrink apparatus (9) for connecting the materials lying against one another by shrinking of the plastics foils under the effect of heat.

10. Apparatus according to claim 9, characterised in that the shrink apparatus (9) comprises a device for producing a stream of hot gas, and in that the hot gas stream is adapted to be conducted against each outer surface of the composite material formed by the plastics foils (2, 2a, 2b).

11. Apparatus according to one of claims 9 or 10, characterised in that a device is provided for smoothing and regulating at least the network (1) before the shrink apparatus (9) in the direction of movement.

## Revendications

1. Matériau composite comprenant un treillis métallique (1) et au moins une feuille flexible en matière plastique (2) qui recouvre les ouvertures de ce treillis, matériau caractérisé par le fait que la feuille flexible en matière plastique (2) est une feuille thermorétractable qui est thermorétractée sur le treillis (1), ce treillis (1) étant réalisé sous la forme d'une carcasse de support absorbant les forces de retrait.

2. Matériau composite selon la revendication 1, caractérisé par le fait que le treillis (1) est recouvert, de part et d'autre, par une feuille flexible respective en matière plastique (2a, 2b).

3. Matériau composite selon la revendication 2, caractérisé par le fait que les feuilles en matière plastique (2a, 2b) déposées sur les deux faces sont reliées l'une à l'autre à travers les ouvertures du treillis (1).

4. Matériau composite selon l'une des revendications 1 à 3, caractérisé par le fait qu'une structure maillée (3) est insérée entre le treillis (1) et au moins une feuille en matière plastique (2), cette structure coiffant les ouvertures du treillis et présentant des mailles plus fines et une plus grande minceur que ledit treillis (1).

5. Procédé pour fabriquer un matériau composite selon l'une des revendications 1 à 4, procédé caractérisé par le fait que les matériaux utilisés sont placés parallèlement les uns sur les autres avec alignement, sous forme de nappes et/ou de morceaux; et par le fait que la feuille en matière plastique est thermorétractée dans cette position.

6. Procédé selon la revendication 5, caractérisé par le fait que les matériaux utilisés sont dévidés en continu d'une réserve, respective et sont dirigés, en application superposée, vers un dispositif de thermorétraction.

7. Procédé selon la revendication 6, caractérisé par le fait que, dans le dispositif de thermorétraction, la feuille en matière plastique est ramollie au moyen d'un flux de gaz chaud et est pressée contre le treillis.

8. Procédé selon l'une des revendications 5 à 7, caractérisé par le fait qu'au moins le treillis parcourt un dispositif de lissage et de dressage.

9. Dispositif pour fabriquer un matériau composite selon l'une des revendications 1 à 4 et pour la mise en oeuvre du procédé selon l'une des revendications 5 à 8, dispositif caractérisé par un dispositif respectif de réserve (5, 6, 7, 8) pour chacun des matériaux utilisés (1, 2, 2a, 2b, 3), des rouleaux applicateurs (10, 11, 12, 13) en vue d'aligner mutuellement et d'appliquer les uns contre les autres les matériaux dévidés de chaque dispositif de réserve considéré (5, 6, 7, 8), ainsi que par un plateau de convoyage (4) pour acheminer vers un dispositif de thermorétraction (9) les matériaux (1, 2, 2a, 2b, 3) appliqués les uns sur les autres, de façon à solidariser ces matériaux superposés, par thermorétraction de la feuille en matière plastique sous l'action de la chaleur.

10. Dispositif selon la revendication 9, caractérisé par le fait que le dispositif de thermorétraction (9) est un dispositif pour engendrer un flux de gaz chaud; et par le fait que ce flux de gaz chaud peut être dirigé vers chaque surface du matériau composite formée par la feuille en matière plastique (2, 2a, 2b).

11. Dispositif selon l'une des revendications 9 ou 10, caractérisé par le fait qu'un dispositif pour lisser et dresser au moins le treillis (1) est prévu, dans la direction du mouvement, avant le dispositif de thermorétraction (9).

2

1

Fig.1

2a

1

2

2b

Fig.2

Fig. 3

Fig. 4

Fig.5